# EUROPÄISCHE PATENTSCHRIFT

(11) **EP 0 458 171 B1**
(45) Veröffentlichungstag und Bekanntmachung des Hinweises auf die Patenterteilung: **04.03.1998**
(21) Anmeldenummer: 91107819.4
(22) Anmeldetag: 15.05.1991
(51) Int. Cl.: B01D 53/02, B01D 5/00

(54) **Verfahren und Anlage zur Trennung eines Gemisches aus zwei gasförmigen Komponenten**
Method and apparatus for the separation of a mixture of two gaseous components
Méthode et dispositif pour la séparation d'un mélange de deux composants gazeux

(30) Priorität: 22.05.1990 DE 4016513
(43) Veröffentlichungstag der Anmeldung: 27.11.1991
(73) Patentinhaber: ADELMANN Aktiengesellschaft, D-97753 Karlstadt (DE)
(72) Erfinder: Adelmann, Waldemar, W-8782 Karlstadt (DE)
(74) Vertreter: Pöhner, Wilfried Anton, Dr.

(56) Entgegenhaltungen:
- EP-A- 0 189 041
- CH-A- 673 592
- DE-A- 3 824 046
- US-A- 4 049 569
- US-A- 4 411 136
- KIRK-OTHMER, ENCYCLOPEDIA OF CHEMICAL TECHNOLOGY, vol.1, no. 3, 1978, NEW YORK, pages 544 - 549

## Beschreibung

Die Erfindung betrifft ein Verfahren zur Trennung eines Gemisches aus zwei gasförmigen Komponenten mit unterschiedlicher Siedetemperatur, insbesondere aus Luft und Fluorchlorkohlenwasserstoffen (FCKW), das bei der Wiederverwertung von PUR-Kunststoffschäumen anfällt, bei dem das Gasgemisch verdichtet und auf eine Temperatur unter dem Siedepunkt der auszuscheidenden Gaskomponente abgekühlt wird, worauf die verflüssigte Gaskomponente in einen besonderen Behälter abgeleitet und das verbleibende Gasgemisch mit einem jetzt nur noch geringen Anteil der auszuscheidenden Gaskomponente über Filter, die die restliche auszuscheidende Gaskomponente bis auf einen minmalen Anteil entfernen, an die Umwelt abgeleitet wird.

Aus der DE-A-38 24 046 ist ein Verfahren zur Reinigung lösungsmittelhaltiger Abluft bekannt, bei dem die Abluft zunächst in einem Vorkühler und anschließend durch eine Wärmepumpe gekühlt wird, so daß das kondensierende Lösungsmittel einem separaten Behälter zugeführt werden kann. Die Luft wird anschließend mittels eines Aktivkohlefilters gereinigt und über ein Gebläse an die Umgebung abgeführt.

In der CH-A-673 592 ist ein Verfahren gattungsgemäßer Art beschrieben. Das ein Lösungsmittel enthaltende, mittels einer Flüssigkeits-Ringpumpe aus einem unter Vakuum arbeitenden Apparat abgesaugte, komprimierte Gas wird einem gekühlten Kondensator zugeführt, in dem (zusätzlich zu dem bereits in der Pumpe niedergeschlagenen Anteil des mit dem Gas angesaugten Lösungsmittels) weitere Lösungsmittelmengen kondensieren. Sie werden einem separaten Behälter zugeführt. An den Kondensator schließt sich in Strömungsrichtung des Gases ein weiterer Kondensator und ein als Filter dienendes Molekularsieb an. Das gereinigte Gas wird schließlich der Atmosphäre zugeführt.

Der Nachteil derartiger Verfahren liegt in einer vergleichsweise geringen Effektivität und in einem hohen Restanteil der auszuscheidenden Gaskomponente nach Passieren der Verflüssigungsstation.

Ausgehend hiervon hat es sich die Erfindung zur Aufgabe gemacht, ein Verfahren und eine Anlage zur Trennung derartiger gasförmiger Gemische bereitzustellen, die eine hohe Effektivität in dem Sinne aufweist, daß die auszuscheidende Gaskomponente in dem an die Umwelt abgegebenen Gasgemisch nur noch in geringem Maße vorhanden ist.

Diese Aufgabe wird erfindungsgemäß dadurch gelöst, daß das dem Filter zugeführte Gasgemisch entspannt wird, daß der Filter ein Aktivkohlefilter ist und daß innerhalb des Aktivkohlefilters ein Unterdruck erzeugt wird.

Mit der Einführung einer zusätzlichen Kühlung des Gasgemisches kann einerseits der zur Erhöhung des Siedepunktes erforderliche Druck reduziert, andererseits bei gleichbleibendem Druck eine erhöhte Auskondensation der zu entfernenden Gaskomponente erreicht werden. Das gesamte Verfahren erreicht durch die Einführung einer zusätzlichen Kühlung eine erheblich höhere Effektivität hinsichtlich des Ausscheidens der zu entfernenden Gaskomponente aus dem Gasgemisch. Damit verbunden ist eine erheblich geringere Belastung der nachgeschalteten Aktivkohlefilter. Diese Aktivkohlefilter wiederum können die jetzt nur noch geringen Anteile der zu entfernenden Gaskomponente in dem Gasgemisch nahezu vollständig binden. Eine Regenerierung dieser Filter ist wegen des geringen Anteils der zu entfernenden Gaskomponente nach Verflüssigung unter Druck und Kühlung nur noch in vergleichsweise großen Zeitabständen erforderlich.

Zudem wird innerhalb der Aktivkohlefilter ein Unterdruck erzeugt. Durch diesen Unterdruck ist es sichergestellt, daß auch bei einer eventuell auftretenden Undichtigkeit des Filtergehäuses, wie sie beispielsweise durch mechanische Beschädigungen oder Korrosion entstehen kann, nichts von der zu entfernenden, unerwünschten Gaskomponente an die Umwelt abgegeben wird.

Weiterhin wird vorgeschlagen, daß das Gasgemisch nach Passieren der Aktivkohlefilter wenigstens teilweise einer erneuten Verflüssigung wie in Anspruch 1 beschrieben, zugeführt wird. Durch die wenigstens teilweise Rückführung des Gasgemisches nach Passieren der Aktivkohlefilter kann die Konzentration der zu entfernenden Gaskomponente in der Abluft erneut verringert werden.

Zudem wird ein Verfahren zur Regenerierung der Aktivkohlefilter vorgeschlagen, das sich dadurch auszeichnet, daß der Aktivkohlefilter in Gegenstromrichtung von einem erhitzten Gas, vorzugsweise Heißluft oder einem Inertgas, durchströmt wird, das die im Filter gebundenen Anteile der zu entfernenden gasförmigen Komponente aus dem Filter herauslöst, worauf das entstandene Gemisch aus gasförmigen Filterrückständen und heißem Gas einer erneuten Verflüssigung wie in Anspruch 1 beschrieben, zugeführt wird.

Der damit verbundene Vorteil liegt in der durch die Regenerierung sichergestellten permanenten Verwendbarkeit der Filter. Ein Austausch der in den Filtern vorhandenen Aktivkohle ist nicht erforderlich. Da die Regenerierung ohne weitere Schwierigkeiten möglich ist, ist ein nahezu permanenter Betrieb der Anlage gewährleistet. Die Regenerierung kann etwa zur Nachtzeit oder an den Wochenenden stattfinden, wenn die Anlage nicht zur Trennung arbeitet.

Im weiteren wird eine Anlage zur Durchführung der oben beschriebenen Verfahren vorgeschlagen, die sich durch einen Verdichter, eine Kühleinrichtung, ein Überstromventil zur Entspannung des Gasgemisches nach der Verflüssigung der zu entfernenden Komponente, einen Aktivkohlefilter und Mittel zur Erzeugung von Unterdruck im Aktivkohlefilter auszeichnet. Der damit verbundene Vorteil besteht in erster Linie darin, daß sich mit den Elementen dieser Anlage die Verfahren nach den Ansprüchen 1 bis 3 unschwer und ökonomisch durchführen lassen.

Überdies ist in einer weiteren Ausbildung der Erfindung bevorzugt, daß die Anlage zwei parallele Aktivkohlefilter und eine Meß- und Regeleinrichtung enthält, die die Zusammensetzung des Gasgemisches nach Verlassen der Aktivkohlefilter kontrolliert und bei Überlastung eines der Filter den Gasstrom auf den jeweils anderen der Filter umleitet.
Auf diese Weise ist zuverlässig sichergestellt, daß kein unerwünscht hoher Anteil der zu entfernenden Gaskomponente an die Umwelt abgegeben wird. Bei Überlastung eines der Filter wird der Gasstrom automatisch auf den jeweils anderen Filter umgeleitet. Dadurch ist es unmöglich, daß etwa durch ein Übersehen der Sättigung eines der Filter eine Umweltbelastung auftritt. Zudem ist ein kontinuierlicher Betrieb der Anlage auch bei Ar beiten an einem Filter gewährleistet.

Weitere Einzelheiten, Merkmale und Vorteile der Erfindung lassen sich dem nachfolgenden Beschreibungsteil entnehmen, in dem anhand einer Zeichnung ein Ausführungsbeispiel der Erfindung näher erläutert wird.

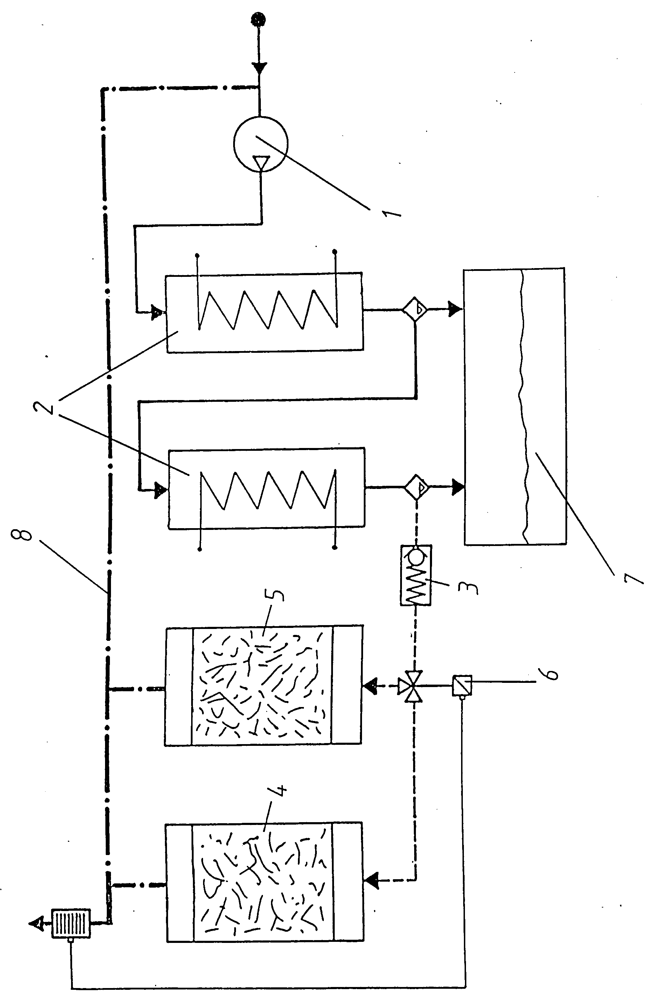

Die Zeichnung zeigt eine erfindungsgemäße Anlage in schematischer Darstellung.

Hier ist die gesamte Anlage in vereinfachter Form schematisch so dargestellt, daß die Funktionsabläufe deutlich werden. Die Strömungsrichtung des Gasgemisches ist durch Pfeile markiert.
Es ist deutlich erkennbar, daß das Gas zunächst die Verdichtungseinrichtung (1) durchläuft, indem das Gasgemisch so verdichtet wird, daß seine Temperatur über dem Siedepunkt der zu entfernenden Gaskomponente liegt. Soweit sich die zu entfernende Gaskomponente bereits hier verflüssigt, wird sie dem Sammelbehälter (7) zugeleitet. Anschließend durchläuft das Gasgemisch die Kühleinrichtung (2), indem der weitaus größte Anteil der zu entfernenden Gaskomponente durch Kondensation verflüssigt wird. Auch hier wird das auskondensierende zu entfernende Gas dem Sammelbhälter (7) zugeleitet. Sodann passiert das Gasgemisch über ein Überstromventil (3), in dem es entspannt wird, die Aktivkohlefilter (4) und (5). Über eine Meß- und Regeleinrichtung (6) wird der Anteil der zu entfernenden Gaskomponente nach Passieren der Aktivkohlefilter (4,5) festgestellt. Diese Regeleinrichtung (6) steuert die Verteilung des Gasgemisches auf die Aktivkohlefilter (4) und (5), so daß bei Überlastung eines der Filter (4, 5) sofort auf den jeweils anderen Filter umgeschaltet wird. Es ist auch eine Leitung (8) zu erkennen, die einer teilweisen Rückführung des Gasgemisches nach Passieren der Aktivkohlefilter zur Verflüssigung dient.

## Patentansprüche

1. Verfahren zur Trennung eines Gemisches aus zwei gasförmigen Komponenten mit unterschiedlicher Siedetemperatur, insbesondere aus Luft und Fluorchlorkohlenwasserstoffen (FCKW), das bei der Wiederverwertung von PUR-Kunststoffschäumen anfällt, bei dem das Gasgemisch verdichtet und auf eine Temperatur unter dem Siedepunkt der auszuscheidenden Gaskomponente abgekühlt wird, worauf die verflüssigte Gaskomponente in einen besonderen Behälter abgeleitet und das verbleibende Gasgemisch mit einem jetzt nur noch geringen Anteil der auszuscheidenden Gaskomponente über Filter, die die restliche auszuscheidende Gaskomponente bis auf einen minmalen Anteil entfernen, an die Umwelt abgeleitet wird, **dadurch gekennzeichnet,** daß das dem Filter zugeführte Gasgemisch entspannt wird, daß der Filter ein Aktivkohlefilter ist und daß innerhalb des Aktivkohlefilters ein Unterdruck erzeugt wird.

2. Verfahren nach Anspruch 1, **dadurch gekennzeichnet,** daß das Gasgemisch nach Passieren des Aktivkohlefilters wenigstens teilweise einer erneuten Verflüssigung, wie in Anspruch 1 beschrieben, zugeführt wird.

3. Verfahren nach Anspruch 1 oder 2, **dadurch gekennzeichnet,** daß der Aktivkohlefilter zur Regenerierung in Gegenstromrichtung von einem erhitzten Gas, vorzugsweise Heißluft oder einem Inertgas durchströmt wird, das die im Filter gebundenen Anteile der zu entfernenden Gaskomponente aus dem Filter herauslöst, worauf das entstandene Gemisch aus gasförmigen Filterrückständen und heißem Gas einer erneuten Teilverflüssigung, wie in Anspruch 1 beschrieben, zugeführt wird.

4. Anlage zur Durchführung eines der Verfahren nach einem der Ansprüche 1 bis 3, mit einem Verdichter (1), einer Kühleinrichtung (2) und einem Filter, **dadurch gekennzeichnet**, daß zwischen der Kühleinrichtung (2) und dem Filter ein Überströmventil (3) zur Entspannung des Gasgemisches nach der Verflüssigung der zu entfernenden Gaskomponente angeordnet ist daß der Filter ein Aktivkohlefilter ist und daß Mittel zur Erzeugung von Unterdruck im Aktivkohlefilter vorgesehen sind.

5. Anlage nach Anspruch 4, **gekennzeichnet durch** zwei parallele Aktivkohlefilter (4, 5) und eine Meß- und Regeleinrichtung (6), die die Zusammensetzung des Gasgemisches nach Verlassen der Aktivkohlefilter (4, 5) kontrolliert und bei Überlastung eines der Filter (4, 5) den Gasstrom auf den jeweils anderen der Filter (4, 5) umleitet.

## Claims

1. Process for the separation of a mixture of two gaseous components with different boiling temperatures, especially of air and chlorofluorohydrocarbons (CFCS), formed during the reutilization of PUR-foamed plastics, in which the gas mixture is compressed and cooled to a temperature below the boiling point of the gas component to be separated, upon which the liquefied gas component is drained into a special container and the remaining gas mixture, with a now only small portion of the gas component to be separated, is dissipated into the environment via filters, which remove the remaining gas component to be separated to a minimum portion, wherein the gas mixture supplied to the filter is expanded, the filter is an activated carbon filter and within the activated carbon filter negative pressure is generated.

2. Process according to claim 1, **wherein** the gas mixture is supplied, after passing the activated carbon filter, at least partially for renewed liquefaction, as described in claim 1.

3. Process according to claim 1 or 2, **wherein**, in order to regenerate the filter, a heated gas, preferably hot air or an inert gas, flows through the activated carbon filter in the counter direction, which releases the part of the gas component to be separated bound in the filter, whereupon the mixture of gaseous filter residues and hot gas that arises is supplied for a renewed partial liquefaction, as described in claim 1.

4. Installation to perform one of the processes according to one of claims 1 to 3, having a compressor (1), a cooling device (2) and a filter, **wherein** between the cooling device (2) and the filter an overflow valve (3) is disposed to expand the gas mixture after the liquefaction of the gas component to be separated, the filter is an activated carbon filter and means to generate negative pressure in the activated carbon filters are provided.

5. Installation according to claim 4, **wherein** there are two parallel activated carbon filters (4, 5) and a measuring and controlling device (6), which controls the composition of the gas mixture after leaving the activated carbon filters (4, 5), and where if one of the filters (4, 5) is overloaded the gas flow is diverted to the other respective filter (4, 5).

## Revendications

1. Procédé destiné à séparer un mélange gazeux formé de deux composants gazeux ayant différents points d'ébullition, en particulier d'air et d'hydrofluorocarbone (HCF) qui se dégage lors du recyclage de mousses synthétiques PUR, prévoyant que le mélange gazeux soit compressé et refroidi à une température inférieure à celle du point d'ébullition du composant gazeux à éliminer, qu'ensuite, le composant gazeux liquéfié soit évacué dans un récipient spécial et que le mélange gazeux restant ne contenant maintenant qu'une faible proportion du composant gazeux à éliminer passe sur des filtres qui éliminent les composants gazeux encore restants devant être évacués en les réduisant à une proportion minimale, et soit évacué à l'extérieur **caractérisé par le fait que** le mélange gazeux amené au filtre est détendu, que le filtre est un filtre au carbone actif et qu'à l'intérieur du filtre au carbone actif une sous-pression soit produite.

2. Procédé selon la revendication 1, **caractérisé par le fait que** le mélange gazeux est, après le passage par le filtre au carbone actif, au moins en partie à nouveau liquéfié comme décrit dans la revendication 1.

3. Procédé selon la revendication 1 ou 2, **caractérisé en ce qu'un** gaz chauffé, de préférence de l'air chaud ou un gaz inerte passe dans le filtre au carbone actif dans le sens contraire du courant aux fins de régénération et qu'il retire du filtre les résidus présents dans le filtre du composant gazeux à éliminer et que, ensuite, le mélange ainsi obtenu de résidus gazeux provenant du filtre et du gaz échauffé est liquéfié de nouveau en partie comme décrit dans la revendication 1.

4. Installation permettant d'exécuter un des procédés selon une des revendications 1 à 3, avec un compresseur (1), une installation de refroidissement (2) et un filtre, **caractérisée en ce que**, entre l'installation de refroidissement (2) et le filtre se trouve une valve de barrage (3) pour détendre le mélange gazeux après la liquéfaction des composants gazeux à éliminer et que des éléments sont prévus pour produire dans le filtre au charbon actif une sous-pression et que le filtre est un filtre au charbon actif.

5. Installation selon la revendication 4, **caractérisée par** deux filtres au charbon actif (4, 5) et un dispositif de mesure et de réglage (6) qui contrôle la composition du mélange gazeux après qu'il a été évacué des filtres au charbon actif (4, 5) et qu'en cas de surcharge de l'un des filtres (4, 5), il dévie le flux de gaz sur l'autre filtre (4, 5).
